# EUROPEAN PATENT SPECIFICATION

(11) **EP 2 832 035 B1**
(45) Date of publication and mention of the grant of the patent: **12.12.2018**
(21) Application number: 13715408.4
(22) Date of filing: 27.03.2013
(51) Int. Cl.: H04L 9/08, H04L 29/06, H04L 29/08

(54) **SECURITY**
WERTPAPIER
SÉCURITÉ

(30) Priority: 30.03.2012 GB 201205661
(43) Date of publication of application: 04.02.2015
(73) Proprietor: BAE Systems PLC, London SW1Y 5AD (GB)
(72) Inventor: CULLEN, Alan, Manuel, Chelmsford Essex CM2 8HN (GB); DEARLOVE, Christopher, Mark, Chelmsford Essex CM2 8HN (GB); JENKINSON, Graeme, Craig, Chelmsford Essex CM2 8HN (GB)
(74) Representative: BAE SYSTEMS plc Group IP Department
(86) International application number: PCT/GB2013/050797
(87) International publication number: WO 2013/144618

(56) References cited:
- US-A- 5 602 916
- US-A1- 2010 011 007
- US-A1- 2010 031 342

## Description

The present invention relates to a method and apparatuses, as defined in the appended independent claims, for secure information sharing between a first domain and a plurality of further domains, in particular but not exclusively, the method and apparatus may be for information sharing during multi-national or multi-organisational collaborations. Prior art solutions are disclosed in documents: US 5,602,916 and US 2010/0011007 A1.

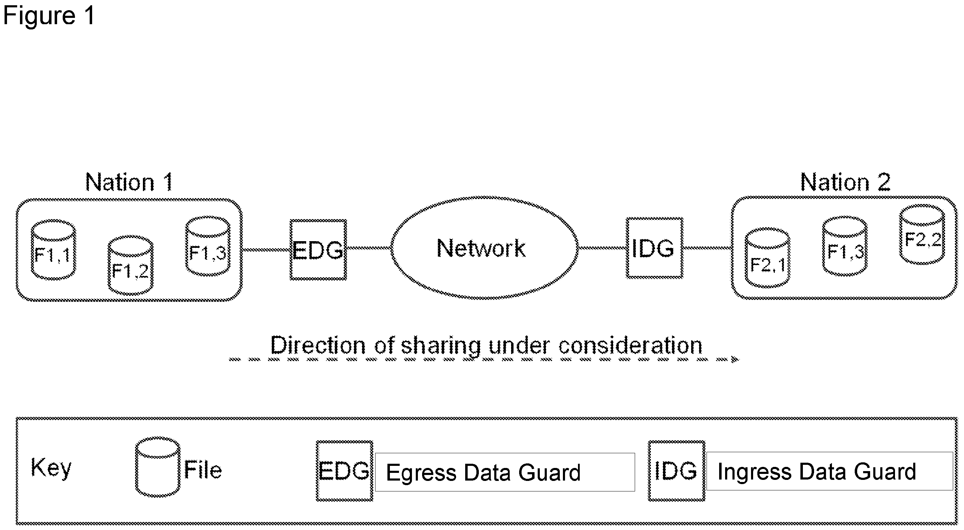

Known ways of sharing information range from ad hoc methods, for example occasional file transfers via memory sticks, to methods which are more formally supported via an infrastructure, such as illustrated in Figure 1.

Figure 1 illustrates schematically how a first domain (Nation 1) could generally share information with a second domain (Nation 2) via data guards (IDG, EDG) that support information assurance by checking outgoing and incoming information according to policies. In this example a file, namely F1,3, has been released by Nation 1 to Nation 2.

Attribute Based Encryption (ABE) is a known technology that supports fine grained access control cryptographically; a user can decrypt information, such as a file, only if he or she possesses a key that corresponds to attributes embedded during the encryption process.

According to a first aspect of the invention there is provided a method of secure information sharing between a first domain and a plurality of destination domains, the method comprising: processing a file at the first domain to establish a set of attributes of the file, the attributes of the file comprising a destination attribute for determining permitted domains to which the file may be sent, encrypting the file at the first domain using the attributes of the file, and thereby generating an encrypted file, providing the first domain with, for a first destination domain, a first egress data guard comprising a destination attribute associated with the first destination domain, identifying that the encrypted file is desired to be communicated to the first destination domain, attempting to decrypt the encrypted file at the first egress data guard using a decryption key derived from the destination attribute of the first egress data guard, where decryption will be possible if the destination attribute of the data guard matches the destination attribute of the file, if it has been possible to decrypt the encrypted file at the previous step, making a determination as to whether the file may be communicated to the first destination domain.

As such the egress data guard is unable to decrypt a file that does not have the destination attribute corresponding to the destination domain and, in such circumstances, cannot communicate an unencrypted version of the file.

Further, the above method can tend to obviate the need for a central key authority. As such, the above method may tend to be suited to collaborations between domains where it may be difficult to establish a global key authority for all domains (for example because there may not be enough trust amongst all domain parties) because each destination domain may select their level of interoperability with the first domains according to their relationship with the first domain.

The method may comprise providing, that at least one of the plurality of destination domains is predetermined, or may provide that each of the plurality of destination domains is predetermined. For example a destination domain (or a plurality thereof) and the first domain may be identified as having a need to regularly exchange data.

The method may comprise providing for each of the predetermined destination domains, at least one uniquely associated egress data guard. This may be useful in a many-to-one arrangement. For example, where a first domain wishes to share data according to different rules depending on the type of data to be shared (such as picture files, files, executable programmes, text files) an egress data guard may be set up for each type of data, each egress data guard being operable connected to the destination domain.

Alternatively, there may be provided, for each of the predetermined destination domains, a single uniquely associated egress data guard. As such, all data passing between the first domain and the predetermined destination domain would pass through the same egress data guard.

By thus having one egress data guard (or one group of data guards) for each destination domain, and each destination domain being interfaced with its associated data guard but not others, the management of data distribution can be further controlled for each destination domain and according to the circumstances surrounding the interface between the first domain and the destination domains.

In some circumstances it may be possible to have a method that provides for the communication from the first domain to two or more destination domains via a common egress data guard. However, in such instances, there is a risk of files intended for one such destination domain being transferred inadvertently, perhaps through human error, to an inappropriate destination domain. Consequently, such a method may be suitable where the destination domains with the common egress data guard are sufficiently integrated in other ways (e.g. both destination domains are within the same government, or both destination domains are from politically close organisations/nations) that the negative consequences of an inadvertent miss-transfer, are mitigated.

If it is possible to decrypt the file at the relevant step, the file is permitted to be sent to the destination domain. Alternatively, if it is possible to decrypt at the relevant step, the decrypted file is scanned according to an egress policy.

The method may further comprise: sending the encrypted file to the first destination domain; providing at least one ingress data guard at the first destination domain for determining whether the encrypted file may be received from the first domain into the first destination domain; and communicating a destination decryption key from the first domain to the first destination domain, for selectively enabling the decryption of the file at the first destination domain.

For example, the destination decryption key may selectively enable the decryption based on the attributes of a sub-destination within the destination domain.

As such users in the destination domain who have not been issued with the decryption keys cannot decrypt any of the encrypted files that are received at the destination domain.

Further, eavesdroppers to the communications between the first domain and the destination domain cannot decrypt any of the encrypted files that are desired to be communicated from the first domain and received into the destination domain.

The method may further comprise: providing, for a second destination domain, a second egress data guard at the first domain, the second egress domain comprising a destination attribute associated with the second destination domain; providing the second egress data guard with the capability to analyse the attributes of a file according to an attribute scheme of the second destination domain and an encryption key derived from the attributes of the second destination domain; re-encrypting the file using the encryption key derived from the attributes of the second destination domain; providing an ingress data guard at the second destination domain for determining whether the encrypted file that is desired to be communicated may be received from the first domain into the second destination domain; and providing the ingress data guard with a decryption key derived from an attribute of the second destination domain, wherein users in the second destination domain issued with a decryption key for the second destination domain have the capability to decrypt some of the re-encrypted files that are desired to be communicated from the first domain and received into the further domain.

Typically the first domain and destination domain will be separate administrative domains. As such each may be a private network and/or Local Area Network (LAN). The network may be accessed through a Network Address Translation (NAT) arrangement. The network may be behind a firewall. Further, each domain may be associated with an organisation or department within an organisation. Such organisations may be in particular a government, a University, or a corporation. Thus the invention should tend to facilitate secure inter-organisational sharing of data.

According to a second aspect of the invention there is provided an apparatus arranged to carry out the first aspect of the invention.

According to a third aspect of the invention there is provided a carrier medium for carrying a computer readable code arranged to control a computing device to carry out the method according to any one of the first aspect of the invention.

According to a fourth aspect of the invention, there is provided a system for secure information sharing between a first domain and a plurality of destination domains, the first domain comprising: A. an attribute identification module for processing a file at the first domain to establish a set of attributes of the file, the attributes of the file comprising a destination attribute for determining permitted domains to which the file may be sent, B. an encryption module for encrypting the file at the first domain using the attributes of the file, and thereby generating an encrypted file, C. a first egress data guard for a first destination domain, comprising a destination attribute associated with the first destination domain, wherein, upon identifying that the encrypted file is desired to be communicated to the first destination domain, the system attempts to decrypt the encrypted file at the first egress data guard using a decryption key derived from the destination attribute of the first egress data guard, where decryption will be possible if the destination attribute of the data guard matches the destination attribute of the file, such that if it has been possible to decrypt the encrypted file at step, it is thereby determined whether the file may be communicated to the first destination domain.

It will be understood that different aspects of the present invention may be combined where the context allows.

As such, users in the second destination domain not issued with the decryption keys cannot decrypt some of the encrypted files communicated to the second destination domain.

Further, eavesdroppers to the communications between the first domain and the further domain cannot decrypt any of the encrypted files that are communicated between the domains (i.e. over an intermediate network).

Overall, the ABE-scheme of the invention can tend to promote interoperability. Domains utilising the invention (e.g. nations in a military coalition) may adopt information sharing using different toolsets (e.g. one toolset may be modelled on the first destination scheme, another may be modelled on the second destination scheme) at different rates, so "one size fits all" solutions are not appropriate.

Further, the invention can tend to promote flexibility in information sharing policy. Policy must reflect differing domain requirements including the complexities of the information held. For example, the potential complexity of policies amongst a group of domains may encompass issues such as national security, export rules, and confidential information. Consequently, the ABE scheme of the present invention may tend to be scalable. The scheme may provide a broad attribute set, which would tend to further enhance the flexibility.

Still further, the invention can tend to promote information assurance. Confidentiality, integrity, availability, authentication and non-repudiation all apply in a complex environment where the threats vary from inadvertent user errors to the advanced persistent threat.

The applicant has demonstrated ABE to have an effective strength equivalent to 128 bit Advanced Encryption Standard (AES 128). Integrity and non-repudiation could be satisfied with the additional use of digital signatures. Authentication lies in the process of handling keys and is also implicit in the use of digital signatures. Availability is largely comparable with other approaches although the vulnerability of requiring real-time access to the key authority by some schemes is improved by ABE.

In addition to these factors there are a number of further behaviours with which the invention is compatible, including: useability - where encryption is built into a user's workflow, so that users avoid the temptation to find short cuts; and low overheads - because resources may be limited.

As such the present invention, through employing an ABE-type scheme tends to provide a minimised attack surface for malware to exploit, compared to alternative access control methods such as access control lists.

Further, the present invention tends to reduce the access required by the users to a server authority, as compared to alternative access control methods such as rights management schemes.

The invention may apply soft revocation by incorporating a date in keys and attributes and, when possible, it is also recommended that access patterns to encrypted material are monitored. Alternatively the invention may apply hard revocation where development of non-monotonic policies, for example 'RESTRICTED and not REVOKED USER'.

As an alternative or compliment to recovation, Trusted Computing methods may be used to control access to ABE keys.

An information sharing infrastructure such as provided by the invention may reduce latency and offer the opportunity to optimise security through carefully planned measures related to the expected threats.

So that the invention may be well understood, at least one embodiment shall be described by way of example and with reference to the following figures, of which:-
Figure 1 shows a schematic diagram of how a first domain may share information with a second domain;
Figure 2 shows a schematic diagram of how an Attribute Based Encryption scheme may share files between users; and
Figure 3 shows a schematic diagram of how an Attribute Based Encryption scheme may operate amongst plurality of domains, some domains being legacy (i.e. not using ABE) and others adopting different approaches to their use of the ABE scheme.

ABE is a cryptographic technology where encryption and keys are expressed in terms of attributes. There are two main methods of ABE according to how attributes and policies are applied. In the present embodiment, Key Policy ABE, where policy is stored in keys, has been used. An alternative form of ABE, called Ciphertext Policy ABE, may also be suitable.

When a file is encrypted it is assigned attributes which are arbitrary pieces of text that are meaningful within the policies of the organisation that encrypts the file, e.g. a document, document X, could be assigned the following attributes: INFO_SHARING, 2012, UNCLASSIFIED, EXPORTABLE.

ABE is a form of public key cryptography. Encryption requires ABE system parameters, generated in advance by a key authority, and a decision about which attributes to apply. Decryption requires ABE system parameters together with a private key generated by the key authority. This key must not be revealed to other users. The private key embeds policies such as:
Policy1: (UNCLASSIFIED or RESTRICTED)
Policy2: (INFO_SHARING and EXPORTABLE and 2011)

In these examples a key for Policy1 could decrypt the encrypted version of document X while a key for Policy2 could not.

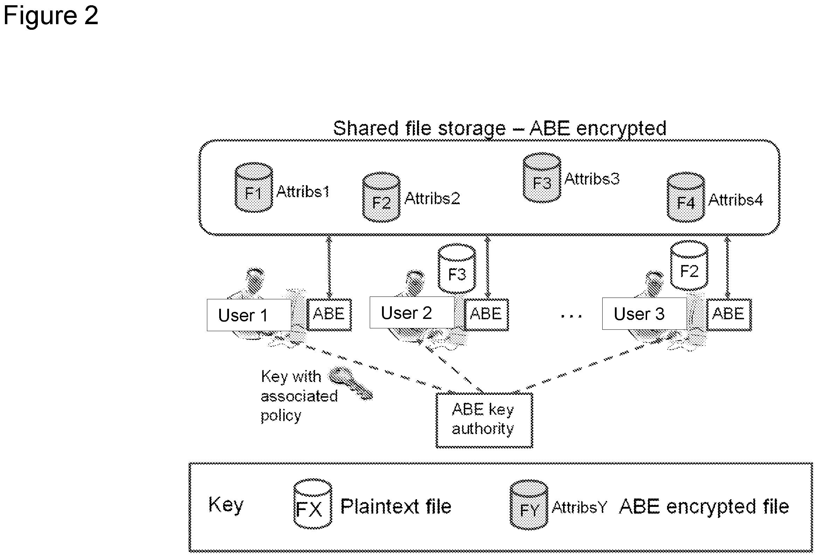

As illustrated in Figure 2, once users have been equipped with their cryptographic information then access to the key authority is no longer required, thus reducing the probability of a server compromise. The authority will only be required when user's rights are changed, for example after promotion, or to refresh date sensitive attributes. This approach also tends to reduce the need for a high performance server and tends to be tolerant to downtime.

ABE tends to be readily scalable. The previous example used just a few attributes but the full set may be as large as desired. The cost is low in that the ciphertext overheads only increase linearly with the number of attributes applied.

ABE tends to prevent collusion. For example a user with the key (INFO_SHARING and EXPORTABLE and 2011) could not collude with a user with the key (INFO_SHARING and UK and 2012) to decrypt the encrypted version of the aforementioned document X.

Further, ABE supports delegation of keys. For example a user with the key (INFO_SHARING or EXPORTABLE) could delegate the key (INFO_SHARING and EXPORTABLE) to somebody deemed to have the need, and this can be carried out without access to the key authority. The mathematics behind ABE are described in V. Goyal et al, "Attribute-Based Encryption for Fine-Grained Access Control of Encrypted Data", 2006, Cryptology ePrint Archive, Report 2006/309, http://eprint.iacr.org/2006/309.pdf together with a proof of security.

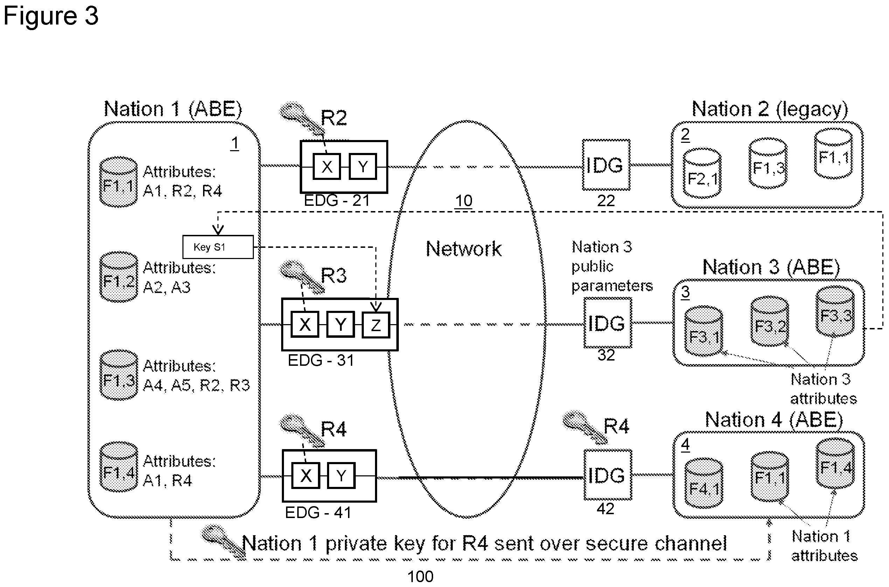

Referring to Figure 3, there is shown a first domain 1, representing the computer storage resource of a first nation Nation 1, which holds four files: F1,1; F1,2 ; F1,3 and F1,4. File F1,1 has attributes A1, R2 and R4. File F1,2 has attributes A2, A3. File F1,3 has attributes A4, A5, R2 and R3. File F1,4 has attributes A1 and R4.

Such attributes may be identified by an attribute identification module (not shown) implemented within the network. Such a module may scan each file to establish the attributes, and/or may rely on predetermined meta-data which has been associated with the file at generation.

Typically, the first domain 1 is provided with an encryption module (not shown) for encrypting files according to, amongst other things, the identified attributes.

Also shown are three further domains. A second domain 2 represents the computer storage resource of Nation 2. The second domain 2 holds the following files: F2,1; F1,3; and F1,1.

A third domain 3 represents the computer storage resource of Nation 3. The third domain 3 holds the following files: F3,1; F3,2; and F3,3.

A fourth domain 4 represents the computer storage resource of Nation 4 and holds the following files: F4,1; F1,1; and F1,4.

The first domain 1 is connected to each of the other domains 2, 3, and 4 across a network 10.

File attributes R2, R3 and R4 are destination attributes which permit the egress of a file having that attribute to the associated domain. For example, File F1,3 has destination attributes R2 and R3 and accordingly may be sent to Nation 2 and/or Nation 3.

The first domain 1 is provided with a specific egress data guard for each specific domain. The egress data guard vets any file which is to be communicated to its associated domain. More specifically, each egress data guard is provided to appropriately decrypt (at X) a file for communication and optionally scan (at Y) the consequently unencrypted file according to further policies.

A first egress data guard 21 is provided for vetting files which may be identified as 'for communication to the second domain 2'. The first egress data guard is provided with a decryption key R2, derived from the associated file destination attribute R2, and suitable for decrypting encrypted files with the R2 destination attribute.

A second egress data guard 31 is provided for vetting files which may be identified as 'for communication to the third domain 3'. The second egress data guard 31 is provided with a decryption key R3 is derived from the associated file destination attribute R3, and suitable for decrypting encrypted files with the R3 destination attribute. The second egress data guard 31 is further provided with a station Z which is able to re-encrypt the file (previously decrypted at X and scanned at Y) using public key information and attributes S1 that have been supplied from Nation 3. Thus an encrypted file may be communicated from Nation 1 to Nation 3 where, of the destination Nations, only Nation 3 can decrypt the file.

A third egress data guard 41 is provided for vetting files which may be identified as 'for communication to the fourth domain 4'. Files may be sent to the fourth domain 4 encrypted according to the scheme of the first domain 1.

In a corresponding manner, each of second 2, third 3 and fourth 4 domains, being destination domains, are provided with an ingress data guard, 22, 32, 42 respectively, for receiving and vetting the incoming files from the first domain 1 in accordance with the policies of that particular destination domain.

The first domain 1 and the fourth domain 4 are further connected by secure channel 100 such that a private key for the ingress data guard 42 may be sent to the fourth domain 4 from the first domain 1.

In operation, ABE may be used independently by adopting domains (Nations), and these domains (Nations) interoperate with other domains (Nations) using alternative and/or legacy approaches.

Figure 3, shows several cases of sharing by an ABE-equipped first domain, Nation 1. In each case, information leaves Nation 1 via egress data guards that are assigned keys with policies R2, R3, R4 for egress to Nation 2, 3 and 4 respectively. These keys are provided because egress checks, for example a scan to confirm absence of sensitive keywords, need to be performed upon unencrypted text. However this approach has the effect that in the event of an error by a data guard, the worst case scenario would result in unencrypted material already intended to be releasable to the associated Nation being leaked.

Nations may choose to carry out further checks of incoming material in ingress data guards. In Figure 3, Nation 2, assumed to be operating under a legacy scheme, will receive information in unencrypted format (e.g. file F1,1), scan it and then store it according to its processes.

In contrast Nation 3 uses an ABE scheme, albeit an ABE scheme independent of the Nation 1 ABE scheme. Once again material is received unencrypted (e.g. file F1,3) at the ingress data guard 32 and scanned, but material is now encrypted by the ingress data guard 32 according to Nation 3's policies. In general the ABE attribute set used by Nation 3 will be different to the Nation 1 set and there is scope for work on mapping attribute sets.

The transmissions from Nation 1 to Nation 2 and from Nation 1 to Nation 3 can carry unencrypted files so some form of communications confidentiality should be deployed between the Nations.

Alternatively, measures may be taken to provide a more encrypted communication scheme.

In particular, in the case of Nation 3 there is an alternative approach whereby the egress data guard 32 from Nation 1 re-encrypts files for Nation 3 thus reducing the need for communications confidentiality. This requires access to ABE public parameters for Nation 3 so would tend not to constitute a security risk. If Nation 1 includes an R1TO3 attribute in all material re-encrypted for Nation 3 then this facilitates a simple R1TO3 policy at the ingress data guard 32 for ingress scanning purposes.

Further, there is a second scenario for file sharing between ABE Nations where the material is not re-encrypted and instead keys are delegated. In the final case illustrated in Figure 3, Nation 1 issues the private key for policy R4 to Nation 4 and Nation 4 then delegates this key to users, e.g. a Nation 4 user could be assigned policy (A1 and R4) and this would permit access to file F1,4. The ingress data guard 42 of Nation 4 accesses and uses the private key for R4 accordingly. This scenario would tend to provide cryptographic simplicity, but would require the management of multiple key and attribute systems by a single Nation.

The applicant has developed a prototype for demonstrating ABE in a cloud based information sharing scenario. The prototype, implemented in C++ and using the MIRACL library (see MIRACL Crypto SDK, as provided by CertiVox, for example as may be available occasionally via the certivox.com website and at http://certivox.com/index.php/solutions/miracl-crypto-sdk/) for the cryptographic primitives, supports both key policy and ciphertext policy methods.

It is known to use public key systems to bootstrap symmetric key systems for performance reasons. The applicant's prototype follows this approach by encrypting the plaintext using a random AES key and then using ABE to encrypt the AES key which is included in the ciphertext.

In the prototype, 128 bit security was implemented using AES-128 and asymmetric pairings over Barreto-Naehrig curves supported by MIRACL. The performance of the software implementation was around 60 ms to encrypt a file with three attributes (i.e. *A, B*, *C*) and around 130 ms to decrypt the file with a policy covering all three attributes (i.e. *A and B and C*)*.* These times were measured on an Intel® E8400 processor running single-threaded at 3.0GHz.

The total ciphertext overhead with three attributes, including the encrypted AES key and padding, was around 400 bytes.

Throughout the specification, various terms have been used to denote features. However, the skilled man would understand that various equivalent terms may apply to these.

In particular, the skilled man would understand attribute based encryption to include encryption schemes based around any permutation or combination of attributes, labels, index terms, meta data and/or the properties of the encrypted information. Further, attribute based encryption schemes would also be understood to include such schemes employing encrypted attributes and automated redaction.

Moreover the skilled man would understand that attribute based encryption schemes could be developed having effective strengths greater than or less than the 128 bit Advanced Encryption Standard (AES-128) and/or with revocation schemes different to the soft method described above.

Further, whilst the above embodiment has been primarily concerned with the sharing of information amongst the domains of specific Nations, the invention would be applicable to various other or equivalent domains such as inter-organisations, inter-platform, inter-security domains (such as between an intranet and the internet or between an unclassified domain and a classified domain). Further, encrypted information could be stored (e.g. in a cloud-type computing arrangement) rather than being passed directly between organisations.

Still further, the skilled man would understand that the invention could be worked on any type of digital information file such as e-mail, records, text, documents, presentations, multimedia, knowledge, audio files, video files, and software.

Also, whilst the embodiment shown in Figure 3 provides a unique egress data guard for each destination domain, in variants of the invention, other connection arrangements between egress data guards and destination domains are contemplated.

For instance, a group of distinct egress data guards may be provided at the first domain and be arranged such that each egress data guard within the group is connected to the same destination domain. Such an arrangement could be implemented to allow different types of digital information file to be handled differently between the first and destination domains. For example, in order to control information exchange, e-mails could be handled by a first generally permissive egress data guard, whilst video files could be handled by a more restrictive egress data guard.

As a further instance of a variant connection arrangement, two or more different destination domains may be connected to the first domain via a common egress data guard. Such an arrangement could reduce the complexity of the system but may allow inadvertent transmission of data to an unintended destination domain sharing the egress data guard. Thus such an arrangement may be suitable where the relationship between the destination domains is sufficiently collaborative and trusting that the negative impact of an inadvertent transmission should tend to be mitigated.

In further variants of the above embodiment, release attributes could be replaced by other release policies that could for example be used to distinguish between multiple egress data guards connected to the same destination domain.

In still further variants, the attribute based encryption can also be applied to scenarios where the destination domain is not determined until encryption time or even later, for example by being left in a 'to be determined' state awaiting a subsequent decision.

Moreover, the skilled man would appreciate that the vetting or scanning procedures carried out by the egress and ingress data guards would include, but not be limited to packet inspection, deep packet inspection, flow inspection, deep flow inspection, re-rendering, format conversion, proxies and sandboxes.

## Claims

1. A method of secure information sharing between a first domain and a plurality of destination domains, the method comprising:
a. Processing a file at the first domain to establish a set of attributes of the file, the attributes of the file comprising a destination attribute for determining permitted domains to which the file may be sent,
b. Encrypting the file at the first domain using the attributes of the file, and thereby generating an encrypted file, and holding that encrypted file at the storage resource of the first domain,
c. providing the first domain with, for a first destination domain, a first egress data guard comprising a destination attribute associated with the first destination domain,
d. identifying that the encrypted file is desired to be communicated to the first destination domain,
e. attempting to decrypt the encrypted file at the first egress data guard using a decryption key derived from the destination attribute of the first egress data guard, where decryption will be possible if the destination attribute of the data guard matches the destination attribute of the file,
f. if it has been possible to decrypt the encrypted file at step e, making a determination as to whether the file may be communicated to the first destination domain.

2. A method according to claim 1 wherein at least one of the plurality of destination domains is predetermined.

3. A method according to claim 1 wherein each of the plurality of destination domains is predetermined.

4. A method according to claim 2 or 3 further comprising providing, for each of the predetermined destination domains, at least one uniquely associated egress data guard.

5. A method according to claim 1, 2 or 3 further comprising providing, for each of the predetermined destination domains, a single uniquely associated egress data guard.

6. The method according to any one of the preceding claims wherein if it is possible to decrypt the file at step e, the file is permitted to be sent to the destination domain.

7. The method according to any one of the preceding claims wherein if it is possible to decrypt the file at step e, the decrypted file is scanned according to an egress policy.

8. A method according to any one of the preceding claims further comprising:
g. sending the encrypted file to the first destination domain,
h. Providing at least one ingress data guard at the first destination domain for determining whether the encrypted file may be received from the first domain into the first destination domain,
i. communicating a destination decryption key from the first domain to the first destination domain, for selectively enabling the decryption of the file at the first destination domain

9. A method according to any of the preceding claims further comprising:
j. Providing, for a second destination domain, a second egress data guard at the first domain, the second egress domain comprising a destination attribute associated with the second destination domain,
k. Providing the second egress data guard with
i. the capability to analyse the attributes of a file according to an attribute scheme of the second destination domain and
ii. an encryption key derived for the second destination domain,
l. re-encrypting the file using the encryption key applied to the attributes of the second destination domain,
m. Providing an ingress data guard at the second destination domain for determining whether the encrypted file that is desired to be communicated may be received from the first domain into the second destination domain,
n. providing the ingress data guard with a decryption key derived from an attribute of the second destination domain,
wherein users in the second destination domain issued with a decryption key for the second destination domain have the capability to decrypt some of the re-encrypted files that are desired to be communicated from the first domain and received into the further domain.

10. A method according to any one of the preceding claims wherein each predetermined destination is an organisation or department within an organisation.

11. A method according to claim 10 wherein the organisation operates an internal network.

12. An apparatus arranged to carry out the method according to any one of claims 1 to 11.

13. A carrier medium for carrying a computer readable code arranged to control a computing device to carry out the method according to any one of claims 1 to 11.

14. A system for secure information sharing between a first domain and a plurality of destination domains, the first domain comprising:
A. an attribute identification module for processing a file at the first domain to establish a set of attributes of the file, the attributes of the file comprising a destination attribute for determining permitted domains to which the file may be sent,
B. an encryption module for encrypting the file at the first domain using the attributes of the file, and thereby generating an encrypted file, and holding that encrypted file at the storage resource of the first domain
C. a first egress data guard for a first destination domain, comprising a destination attribute associated with the first destination domain,
wherein, upon identifying that the encrypted file is desired to be communicated to the first destination domain, the system attempts to decrypt the encrypted file at the first egress data guard using a decryption key derived from the destination attribute of the first egress data guard, where decryption will be possible if the destination attribute of the data guard matches the destination attribute of the file, such that if it has been possible to decrypt the encrypted file, it is thereby determined whether the file may be communicated to the first destination domain.

## Patentansprüche

1. Verfahren zum sicheren gemeinsamen Verwenden von Informationen zwischen einer ersten Domäne und einer Vielzahl von Zieldomänen, wobei das Verfahren Folgendes umfasst:
a. Verarbeiten einer Datei an der ersten Domäne, um einen Satz von Attributen der Datei festzulegen, wobei die Attribute der Datei ein Zielattribut zum Bestimmen von zugelassenen Domänen, an die die Datei gesendet werden darf, umfassen,
b. Verschlüsseln der Datei an der ersten Domäne unter Verwendung der Attribute der Datei und dadurch Erzeugen einer verschlüsselten Datei und Halten dieser verschlüsselten Datei in der Speicherressource der ersten Domäne,
c. Bereitstellen für eine erste Zieldomäne eines ersten Ausgangsdatenwächters, der ein Zielattribut umfasst, das mit der ersten Zieldomäne verknüpft ist, für die erste Domäne,
d. Identifizieren, dass die verschlüsselte Datei zur ersten Zieldomäne übertragen werden soll,
e. Versuchen, die verschlüsselte Datei unter Verwendung eines Entschlüsselungsschlüssels, der aus dem Zielattribut des ersten Ausgangsdatenwächters abgeleitet wurde, am ersten Ausgangsdatenwächter zu entschlüsseln, wo eine Entschlüsselung möglich ist, wenn das Zielattribut des Datenwächters mit dem Zielattribut der Datei übereinstimmt,
f. Wenn es möglich war, die verschlüsselte Datei in Schritt e zu entschlüsseln, Vornehmen einer Bestimmung, ob die Datei zur ersten Zieldomäne übertragen werden kann.

2. Verfahren nach Anspruch 1, wobei mindestens eine der Vielzahl von Zieldomänen vorbestimmt ist.

3. Verfahren nach Anspruch 1, wobei jede der Vielzahl von Zieldomänen vorbestimmt ist.

4. Verfahren nach Anspruch 2 oder 3, das ferner das Bereitstellen von mindestens einem eindeutig verknüpften Ausgangsdatenwächter für jede der vorbestimmten Zieldomänen umfasst.

5. Verfahren nach Anspruch 1, 2 oder 3, das ferner das Bereitstellen eines einzigen eindeutig verknüpften Ausgangsdatenwächters für jede der vorbestimmten Zieldomänen umfasst.

6. Verfahren nach einem der vorhergehenden Ansprüche, wobei, wenn es möglich ist, die Datei in Schritt e zu entschlüsseln, es zulässig ist, die Datei an die Zieldomäne zu senden.

7. Verfahren nach einem der vorhergehenden Ansprüche, wobei, wenn es möglich ist, die Datei in Schritt e zu entschlüsseln, die entschlüsselte Datei gemäß einer Ausgangsrichtlinie gescannt wird.

8. Verfahren nach einem der vorhergehenden Ansprüche, das ferner Folgendes umfasst:
g. Senden der verschlüsselten Datei an die erste Zieldomäne,
h. Bereitstellen von mindestens einem Eingangsdatenwächter an der ersten Zieldomäne zum Bestimmen, ob die verschlüsselte Datei von der ersten Domäne in der ersten Zieldomäne empfangen werden darf,
i. Übertragen eines Zielentschlüsselungsschlüssels von der ersten Domäne zur ersten Zieldomäne zum selektiven Aktivieren der Entschlüsselung der Datei an der ersten Zieldomäne

9. Verfahren nach einem der vorhergehenden Ansprüche, das ferner Folgendes umfasst:
j. Bereitstellen für eine zweite Zieldomäne eines zweiten Ausgangsdatenwächters an der ersten Domäne, wobei die zweite Ausgangsdomäne ein Zielattribut umfasst, das mit der zweiten Zieldomäne verknüpft ist,
k. Bereitstellen von Folgendem für den zweiten Ausgangsdatenwächter
i. der Fähigkeit, die Attribute der Datei gemäß einem Attributschema der zweiten Zieldomäne zu analysieren, und
ii. einem Verschlüsselungsschlüssel, der für die zweite Zieldomäne abgeleitet wurde,
l. erneutes Verschlüsseln der Datei unter Verwendung des Verschlüsselungsschlüssels, der auf die Attribute der zweiten Zieldomäne angewendet wurde,
m. Bereitstellen eines Eingangsdatenwächters an der zweiten Zieldomäne zum Bestimmen, ob die verschlüsselte Datei, die übertragen werden soll, von der ersten Domäne in der zweiten Zieldomäne empfangen werden darf,
n. Bereitstellen eines Entschlüsselungsschlüssels, der aus einem Attribut der zweiten Zieldomäne abgeleitet wurde, für den Eingangsdatenwächter,
wobei Benutzer in der zweiten Zieldomäne, an die ein Entschlüsselungsschlüssel für die zweite Zieldomäne ausgegeben wurde, die Fähigkeit besitzen, einige der erneut verschlüsselten Dateien, die von der ersten Domäne übertragen und in der weiteren Domäne empfangen werden sollen, zu entschlüsseln.

10. Verfahren nach einem der vorhergehenden Ansprüche, wobei jedes vorbestimmte Ziel ein Unternehmen oder eine Abteilung in einem Unternehmen ist.

11. Verfahren nach Anspruch 10, wobei das Unternehmen ein internes Netzwerk betreibt.

12. Einrichtung, die angeordnet ist, das Verfahren nach einem der Ansprüche 1 bis 11 auszuführen.

13. Trägermedium zum Ausführen eines computerlesbaren Codes, der angeordnet ist, eine Datenverarbeitungsvorrichtung zu steuern, um das Verfahren nach einem der Ansprüche 1 bis 11 auszuführen.

14. System für eine sichere gemeinsame Verwendung von Informationen zwischen einer ersten Domäne und einer Vielzahl von Zieldomänen, wobei die erste Domäne Folgendes umfasst:
A. Attributidentifikationsmodul zum Verarbeiten einer Datei an der ersten Domäne, um einen Satz von Attributen der Datei festzulegen, wobei die Attribute der Datei ein Zielattribut zum Bestimmen von zugelassenen Domänen, an die die Datei gesendet werden darf, umfassen,
B. Verschlüsselungsmodul zum Verschlüsseln der Datei an der ersten Domäne unter Verwendung der Attribute der Datei und dadurch Erzeugen einer verschlüsselten Datei und Halten dieser verschlüsselten Datei in der Speicherressource der ersten Domäne
C. erster Ausgangsdatenwächter für eine erste Zieldomäne, der ein Zielattribut umfasst, das mit der ersten Zieldomäne verknüpft ist,
wobei nach dem Identifizieren, dass die verschlüsselte Datei zur ersten Zieldomäne übertragen werden soll, das System versucht, die verschlüsselte Datei unter Verwendung eines Entschlüsselungsschlüssels, der aus dem Zielattribut des ersten Ausgangsdatenwächters abgeleitet wurde, am ersten Ausgangsdatenwächter zu entschlüsseln, wo eine Entschlüsselung möglich ist, wenn das Zielattribut des Datenwächters mit dem Zielattribut der Datei übereinstimmt, derart, dass, wenn es möglich war, die verschlüsselte Datei zu entschlüsseln, dadurch bestimmt wird, ob die Datei zur ersten Zieldomäne übertragen werden darf.

## Revendications

1. Procédé de partage d'informations sécurisé entre un premier domaine et une pluralité de domaines de destination, le procédé comprenant :
a. le traitement d'un fichier au niveau du premier domaine pour établir un ensemble d'attributs du fichier, les attributs du fichier comprenant un attribut de destination pour déterminer des domaines autorisés auxquels le fichier peut être envoyé,
b. le cryptage du fichier au niveau du premier domaine à l'aide des attributs du fichier, et la génération ainsi d'un fichier crypté, et le maintien de ce fichier crypté au niveau de la ressource de stockage du premier domaine,
c. la fourniture au premier domaine, pour un premier domaine de destination, d'une première protection de données de sortie comprenant un attribut de destination associé au premier domaine de destination,
d. l'identification du souhait de communiquer le fichier crypté au premier domaine de destination,
e. la tentative de décrypter le fichier crypté au niveau de la première protection de données de sortie à l'aide d'une clé de décryptage dérivée de l'attribut de destination de la première protection de données de sortie, le décryptage étant possible si l'attribut de destination de la protection de données correspond à l'attribut de destination du fichier,
f. s'il a été possible de décrypter le fichier crypté à l'étape e, le fait de déterminer si le fichier peut être communiqué au premier domaine de destination.

2. Procédé selon la revendication 1, dans lequel au moins l'un de la pluralité de domaines de destination est prédéterminé.

3. Procédé selon la revendication 1, dans lequel chacun de la pluralité de domaines de destination est prédéterminé.

4. Procédé selon la revendication 2 ou 3, comprenant en outre la fourniture, pour chacun des domaines de destination prédéterminés, d'au moins une protection de données de sortie associée de manière unique.

5. Procédé selon la revendication 1, 2 ou 3, comprenant en outre la fourniture, pour chacun des domaines de destination prédéterminés, d'une seule protection de données de sortie associée de manière unique.

6. Procédé selon l'une quelconque des revendications précédentes, dans lequel, s'il est possible de décrypter le fichier à l'étape e, le fichier est autorisé à être envoyé au domaine de destination.

7. Procédé selon l'une quelconque des revendications précédentes, dans lequel, s'il est possible de décrypter le fichier à l'étape e, le fichier décrypté est balayé selon une politique de sortie.

8. Procédé selon l'une quelconque des revendications précédentes comprenant en outre :
g. l'envoi du fichier crypté au premier domaine de destination,
h. la fourniture d'au moins une protection de données d'entrée au niveau du premier domaine de destination pour déterminer si le fichier crypté peut être reçu du premier domaine dans le premier domaine de destination,
i. la communication d'une clé de décryptage de destination du premier domaine au premier domaine de destination, pour permettre sélectivement le décryptage du fichier au niveau du premier domaine de destination.

9. Procédé selon l'une quelconque des revendications précédentes comprenant en outre :
j. la fourniture, pour un second domaine de destination, d'une seconde protection de données de sortie au niveau du premier domaine, le second domaine de sortie comprenant un attribut de destination associé au second domaine de destination,
k. la fourniture de la seconde protection de données de sortie avec
i. la capacité d'analyser les attributs d'un fichier selon un schéma d'attribut du second domaine de destination et
ii. une clé de cryptage dérivée pour le second domaine de destination,
l. le re-cryptage du fichier à l'aide de la clé de cryptage appliquée aux attributs du second domaine de destination,
m. la fourniture d'une protection de données d'entrée au niveau du second domaine de destination pour déterminer si le fichier crypté dont la communication est souhaitée peut être reçu du premier domaine dans le second domaine de destination,
n. la fourniture de la protection de données d'entrée avec une clé de décryptage dérivée d'un attribut du second domaine de destination,
les utilisateurs dans le second domaine de destination émis avec une clé de décryptage pour le second domaine de destination ayant la capacité de décrypter certains des fichiers recryptés dont la communication est souhaitée à partir du premier domaine et reçus dans l'autre domaine.

10. Procédé selon l'une quelconque des revendications précédentes, chaque destination prédéterminée étant une organisation ou un département dans une organisation.

11. Procédé selon la revendication 10, dans lequel l'organisation fait fonctionner un réseau interne.

12. Appareil agencé pour mettre en oeuvre le procédé selon l'une quelconque des revendications 1 à 11.

13. Milieu de transport pour transporter un code lisible par ordinateur agencé pour commander un dispositif informatique pour mettre en oeuvre le procédé selon l'une quelconque des revendications 1 à 11.

14. Système de partage d'informations sécurisé entre un premier domaine et une pluralité de domaines de destination, le premier domaine comprenant :
A. un module d'identification d'attribut pour traiter un fichier au niveau du premier domaine pour établir un ensemble d'attributs du fichier, les attributs du fichier comprenant un attribut de destination pour déterminer des domaines autorisés auxquels le fichier peut être envoyé,
B. un module de cryptage pour crypter le fichier au niveau du premier domaine à l'aide des attributs du fichier, et générer ainsi un fichier crypté, et maintenir ce fichier crypté au niveau de la ressource de stockage du premier domaine
C. une première protection de données de sortie pour un premier domaine de destination, comprenant un attribut de destination associé au premier domaine de destination,
lors de l'identification du souhait de communiquer le fichier crypté au premier domaine de destination, le système tentant de décrypter le fichier crypté au niveau de la première protection de données de sortie à l'aide d'une clé de décryptage dérivée de l'attribut de destination de la première protection de données de sortie, le décryptage étant possible si l'attribut de destination de la protection de données correspond à l'attribut de destination du fichier, de telle sorte que, s'il a été possible de décrypter le fichier crypté, il est ainsi déterminé si le fichier peut être communiqué au premier domaine de destination.
